# EUROPEAN PATENT SPECIFICATION

(11) **EP 0 299 526 B1**
(45) Date of publication and mention of the grant of the patent: **19.04.1995**
(21) Application number: 88111432.6
(22) Date of filing: 15.07.1988
(51) Int. Cl.: G06F 5/06, G06F 9/38

(54) **Queue having long word length**
Warteschlange mit grosser Wortlänge
File d'attente à grande longueur de mot

(30) Priority: 15.07.1987 JP 177628/87
(43) Date of publication of application: 18.01.1989
(73) Proprietor: NEC CORPORATION, Tokyo (JP)
(72) Inventor: Nomura, Masahiro, Minato-ku Tokyo (JP); Katori, Shigetatsu, Minato-ku Tokyo (JP)
(74) Representative: Glawe, Delfs, Moll & Partner

(56) References cited:
- EP-A- 0 195 202
- MOTOROLA TECHNICAL DISCLOSURE BULLETIN, vol. 3, no. 1, March 1983, pages 79-80, Schaumburg, Illinois, US; R. PANCOST et al.: "Shift register FIFO"

## Description

### Background of the Invention

### Field of the invention

The present invention relates to a queue apparatus for use in a pre-processing executed in a microcomputer, and more specifically to such a queue apparatus capable of storing and outputting instruction codes or data of a long word length.

### Description of related art

In general, pipelined microcomputers comprise a buffer or queue for storing instruction codes or data prefetched from a memory.

However, some conventional queues have been made to read out only data of a fixed length. For example, if a minimum unit of data read out from the queue is one word, it is not possible to make the bit length of a code or data read out from the queue latch longer than one word. In other words, the data width of the conventional queue is limited by the minimum unit of the width of the read out data. This fixed data width of the queue has become a large hindrance in speed-up of the execution speed by enhancement of hardware of an instruction execution unit, and also in increase of a processing power of the microcomputer by increasing the width of a bus for fetching instruction codes from a memory, beacuse the fixed data width of the queue will limit the supply of the instruction codes to the execution unit in the form of a bottle neck and consequentially restrain the increase of the processing power.

EP-A-0 195 202 discloses a multi-stage memory including a data buffer for storing instruction codes, write pointer for indicating a write address to the data buffer, an address generator for reading, and an address decoder circuit. Each stage storing instruction code or data can be divided into an upper half, including a most significant bit of said instruction code or data, and a lower half, including a least significant bit of said instruction code or data. Since the data buffer needs a write pointer, an address generator for reading and the address decoder circuit the multi-stage memory disclosed therein is complicated.

In "MOTOROLA TECHNICAL DISCLOSURE BULLETIN" vol.3, no. 1, March 1983, pages 79-80, there is disclosed a FIFO shift register with a selector on the output of each cell location such that the stored data in the cell(s) may be either shifted to the next sequential cell(s) or gated to the output of the FIFO. The FIFO may be from 1 to n bits in length and 1 to m bits in width.

### Summary of the Invention

Accordingly, it is an object of the present invention to provide a queue having a simplified hardware and which has overcome the abovementioned short-comings.

The above and other objects of the present invention are achieved in accordance with the present invention by a queue apparatus according to claim 1. Further claims are related to different embodiments of the present invention.

With the above mentioned arrangement, if the width of a write data to the queue is set to two words, the width of a read data from the queue can be selectively changed between one word and two words by controlling the exchanging means. Accordingly, the limit of the read data width of the queue is overcome, and therefore, a sufficient required amount of the instruction codes can be supplied to the execution unit without limit of the instruction code supply. As a result, it is possible to increase the processing power of the microcomputers.

In one embodiment of the invention, the memory means includes m-stage n-word queue (where m is integer and n is even integer) coupled to a bus controller to receive instruction codes or data in units of n words, and the exchanging means is coupled to the queue to independently receive an upper place n/2-word portion and a lower place n/2-word portion of the instruction codes or data latched in the queue, respectively and selectively exchanges the positions of the received upper place and lower place n/2-word portions to each other.

Further, the first reading position indicating means includes a first queue pointer of one-bit width (m+1)-stages associated to the queue so as to indicate the read position of the upper place n/2-word portion of the instruction codes or data latched in the queue, and the second reading position indicating means includes a second queue pointer of one-bit width (m+1)-stages associated to the queue so as to indicate the read position of the lower place n/2-word portion of the instruction codes or data latched in the queue. Each of the queue pointers is such that only one stage is set with a predetermined bit which indicates the reading position, and when the predetermined bit is positioned at an first stage, it indicates that the queue is empty.

In addition, the controlling means includes a queue controller receiving a write signal from the bus controller and first and second read signals from an execution unit receiving the instruction codes or data, the queue controller responding to the received signals to selectively shift the first and second queue pointers either toward an input side or toward an output side. Specifically, m is 1 and n is 2.

Another advantage of the present invention is to provide a queue having a long word length so as to supply a large amount of instructions or data at a high speed.

Still another advantage of the present invention is to provide a queue capable of storing and supplying a variable length of instructions or data.

The above and other objects, features and advantages of the present invention will be apparent from the following description of preferred embodiments of the invention with reference to the accompanying drawings.

### Brief Description of the Drawings

Figure 1 is a diagram of a typical instruction code fetch unit which has an instruction code prefetch queue and which is used in conventional pipelined microcomputers;
Figures 2 to 4 illustrate the conditions of the instruction queue latch and the queue pointer in the instruction code fetch unit shown in Figure 1 under three different cases, respectively;
Figure 5 is a diagram of an instruction code fetch unit in accordance with the present invention which has an instruction code prefetch queue;
Figures 6A to 10B illustrate the conditions of the instruction queue latch, the queue pointers and the exchanger in the instruction code fetch unit shown in Figure 5 under five different cases, respectively; and
Figure 11 is a diagram of one embodiment of a data fetch unit in accordance with the present invention having a data block prefetch queue.

### Description of the Preferred embodiments

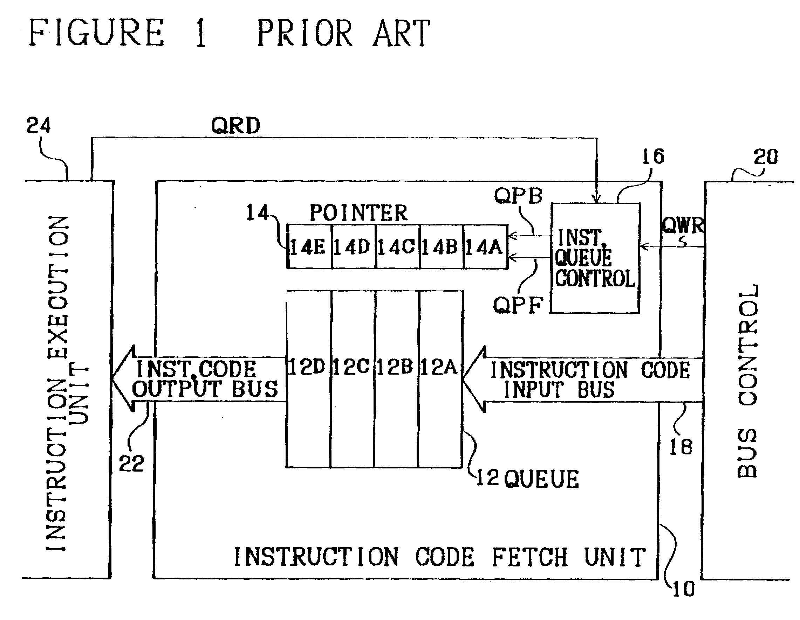

Referring to Figure 1, there is shown a diagram of a typical instruction code fetch unit which has an instruction code prefetch queue and which is used in conventional pipelined microcomputers.

An instruction code fetch unit, indicated by Reference Numeral 10, includes an instruction queue latch 12 for storing instruction codes in units of one word in a first-in first-out manner, and an instruction queue pointer 14 for indicating an read position of the instruction queue latch 12. The instruction code fetch unit 10 also includes an instruction queue controller 16.

In addition, the instruction code fetch unit 10 is coupled through an instruction code input bus 18 of one word length to a bus controller 20 which operates to read an instruction code from a memory (not shown) and to read and write data from and to the memory. The instruction code fetch unit 10 is also coupled through an instruction code output bus 22 of one word length to an execution unit 24 for executing an instruction read from the instruction queue latch 12.

The instruction queue latch 12 is constituted of a shift register having four stages 12A, 12B, 12C and 12D and having the width of one word (1 word x 4 stages). This instruction queue latch 12 is adapted so that when the content of the input bus 18 is fetched into the first shift register stage 12A of the queue latch 12 in response to a write signal to the queue latch 12, all the contents stored in the shift register stages 12A to 12D are shifted by one stage toward the output side.

The instruction queue pointer 14 is constituted of a one-bit width shift register having five stages 14A, 14B, 14C, 14D and 14E (1 bit x 5 stages), and is adapted so that only any one stage of the shift register is of necessity set to "1" and the other stages are maintained at "0". Thus, the stage set with "1" indicates a one word instruction code read position of the queue latch 12, namely the position of a one-word instruction code read out to the execution unit 24 through the output bus 22.

When the queue latch 12 is empty, namely when there is no effective instruction code in the queue latch 12, the first stage 14A of the pointer 14 is set to "1".

As seen from the above, instruction codes which have been read from the memory by the bus controller 20 are written to the instruction queue latch 12 in units of one word, and then, an instruction code is read from the instruction queue latch 12 to the execution unit 24 in units of one word.

The instruction queue controller 16 receives from the bus controller 20 an instruction code write signal QWR indicating to write the instruction codes to the instruction queue latch 12 in units of one word. The instruction queue controller 16 also receives from the execution unit 24 an instruction code read signal QRD indicating to read the instruction codes from the instruction queue latch 12 in units of one word. The instruction queue controller 16 controls the operation of the pointer 14 on the basis of the instruction code write signal QWR and the instruction code read signal QRD. Specifically, the instruction queue controller 16 outputs to the instruction queue pointer 14, a first control signal QPB for indicating a shift of "1" toward the input side by one stage, and a second control signal QPF for indicating a shift of "1" toward the output side by one stage.

Now, operation of the instruction queue fetch unit 10 will be examined.

A combination of the writing operation to the instruction queue latch 12 and the reading operation from the instruction queue latch 12 can be classified into the following three cases:
(1) First case in which only the writing to the instruction queue latch 12 is executed by the bus controller 20 (the QWR signal is active);
(2) Second case in which only the reading from the instruction queue latch 12 to the execution unit 24 is performed (the QRD signal is active); and
(3) Third case in which the writing to the instruction queue latch 12 by the bus controller 20 and the reading from the instruction queue latch 12 to the execution unit 24 are simultaneously performed (both of the QWR signal and the QRD signal are active).

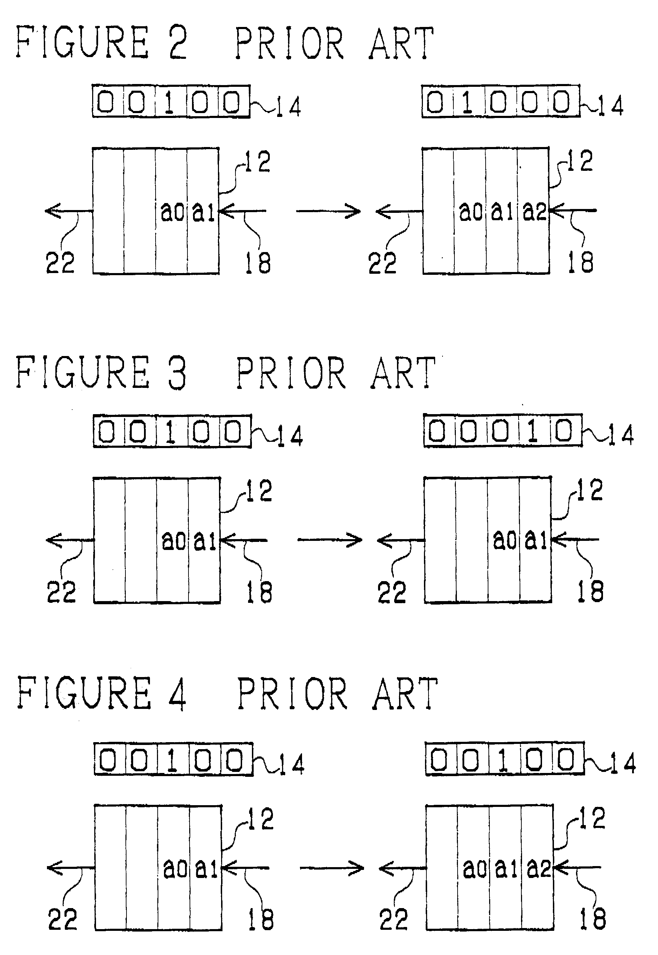

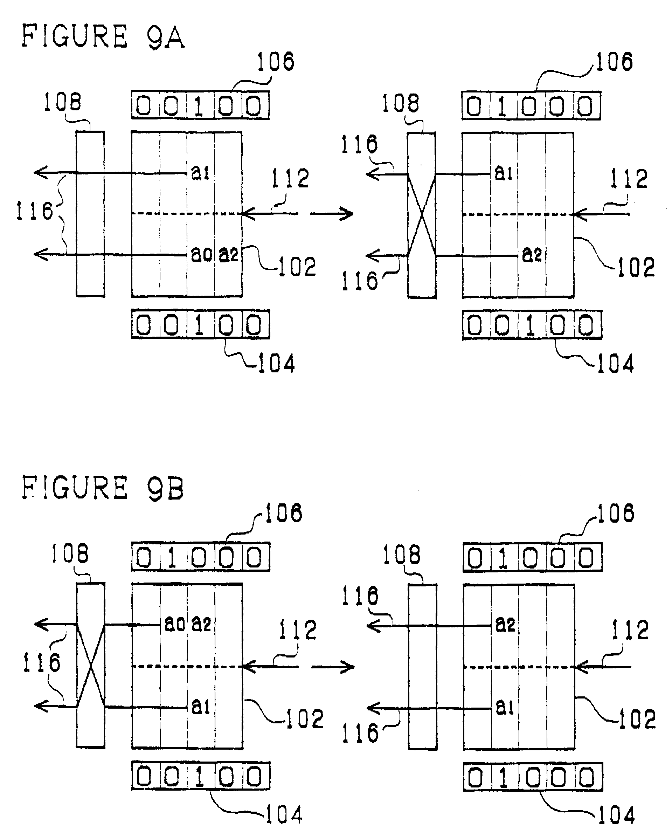

Referring to Figures 2 to 4, there are illustrated the conditions of the instruction queue latch 12 and the queue pointer 14 in the above three cases, respectively. In these drawings, Reference Signs "a0", "a1" and "a2" are indicative of instruction codes in the queue latch 12. In addition, the status shown at the left side is changed to the status shown at the right side.

In the first case, as shown in Figure 2, the contents of the instruction queue latch 12 are shifted toward the output side by one stage, and the instruction queue controller 16 activates the QPF signal so that the instruction pointer 14 is shifted toward the output side by one stage. Accordingly, the instruction code "a0" outputted to the instruction code output bus 22 is not changed.

In the second case, as shown in Figure 3, the contents of the instruction queue latch 12 are not shifted, and the instruction queue controller 16 activates the QPB signal so that the instruction pointer 14 is shifted toward the input side by one stage. Accordingly, a next instruction code "a1" is outputted to the instruction code output bus 22.

In the third case, as shown in Figure 4, the contents of the instruction queue latch 12 are shifted toward the output side by one stage, and the instruction queue controller 16 activates neither the QPF signal nor the QPB signal so that the instruction pointer 14 is not shifted. Accordingly, a next instruction code "a1" is outputted to the instruction code output bus 22.

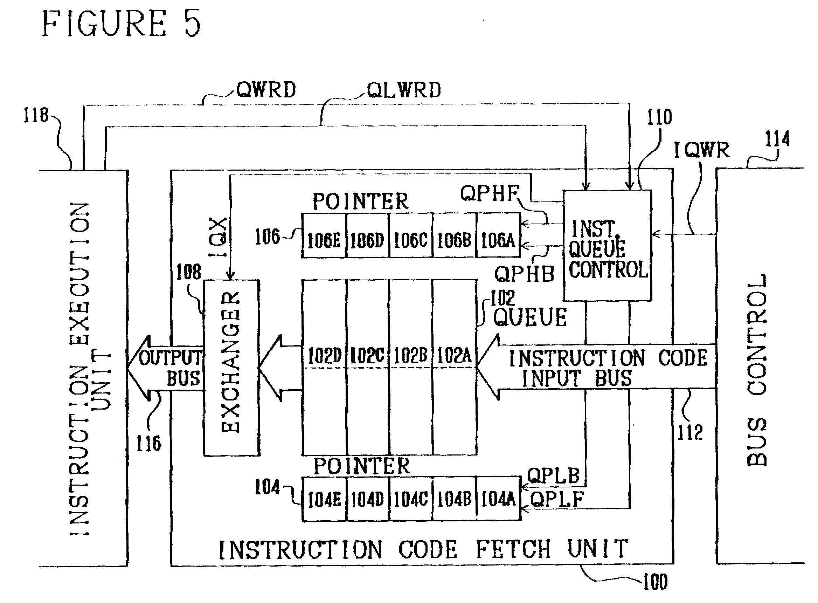

Referring to Figure 5, there is shown a block diagram of one embodiment of an instruction code fetch unit in accordance with the present invention which has an instruction code prefetch queue and which can be used in microcomputers.

An instruction code fetch unit, indicated by Reference Numeral 100, includes an instruction queue latch 102 for storing instruction codes in units of two words and in a first-in first-out manner, a lower place instruction queue pointer 104 for indicating an read position for a lower one-word portion of each two-word instruction code latched in the instruction queue latch 102, and an upper place instruction queue pointer 106 for indicating an read position for an upper one-word portion of each two-word instruction code latched in the instruction queue latch 102. The instruction code fetch unit 100 also includes an instruction queue exchanger 108 receiving the lower one-word data and the upper one-word data outputted from the instruction queue latch 102 and selectively exchanging the positions of the lower and upper place one-word data to each other, and an instruction queue controller 110 for controlling the pair of queue pointers 104 and 106 and the exchanger 108.

In addition, the instruction code fetch unit 100 is coupled through an instruction code input bus 112 of a two-word length to a bus controller 114 which operates to read an instruction code form a memory (not shown) and to read and write data from and to the memory. The instruction code fetch unit 100 is also coupled through an instruction code output bus 116 of a two-word length to an execution unit 118 for executing an instruction read from the instruction queue latch 102.

The instruction queue latch 102 is constituted of a shift register having four stages 102A, 102B, 102C and 102D and having the width of two words (2 words x 4 stages). This instruction queue latch 102 is adapted so that when an content of a two-word width on the input bus 112 is fetched into the first shift register stage 102A of the queue latch 102 in response to a write signal to the queue latch 12, all the contents stored in the shift register stage 102A to 102D are shifted by one stage toward the output side.

The lower place instruction queue pointer 104 is constituted of a one-bit width shift register having five stages 104A, 104B, 104C, 104D and 104E (1 bit x 5 stages), and is adapted so that only any one stage of the shift register is of necessity set to "1" and the other stages are maintained at "0". Namely, the stage set with "1" indicates a read position for the lower place one-word portion of the instruction codes latched in the queue latch 102.

The upper place instruction queue pointer 106 is also constituted of a one-bit width shift register having five stages 106A, 106B, 106C, 106D and 106E (1 bit x 5 stages), and is adapted so that only any one stage of the shift register is of necessity set to "1" and the other stages are maintained at "0". Namely, the stage set with "1" indicates a read position for the upper place one-word portion of the instruction codes latched in the queue latch 102.

When the queue latch 102 is empty, namely when there is no effective instruction code in the queue latch 102, "1" is set to the stage 104A of the pointer 104 and the stage 106A of the pointer 106.

As seen from the above, instruction codes which have been read from the memory by the bus controller 114 are written to the instruction queue latch 102 in units of two words, and then, an instruction code is read from the instruction queue latch 102 to the execution unit 118 in units of one word or in units of two words.

The instruction queue controller 110 receives from the bus controller 114 an instruction code write signal IQWR indicating to write the instruction codes to the instruction queue latch 102 in units of two words. The instruction queue controller 110 also receives from the execution unit 118 a first instruction code read signal QWRD indicating to read the instruction code from the instruction queue latch 102 in units of one word, and a second instruction code read signal QLWRD indicating to read the instruction code from the instruction queue latch 102 in units of two words. The instruction queue controller 110 controls the operation of the pointers 104 and 106 and the exchanger 108 on the basis of the instruction code write signal QWR and the instruction code read signals QWRD and QLWRD.

Specifically, the instruction queue controller 110 outputs to the lower place instruction queue pointer 104, a first control signal QPLB for indicating a shift of "1" toward the input side by one stage, and a second control signal QPLF for indicating a shift of "1" toward the output side by one stage. Further, the instruction queue controller 110 outputs to the upper place instruction queue pointer 106, a first control signal QPHB for indicating a shift of "1" toward the input side by one stage, and a second control signal QPHF for indicating a shift of "1" toward the output side by one stage. In addition, the instruction queue controller 110 outputs an exchange signal IQX to the exchanger 108 for controlling the place inversion of the lower and upper place one-word data portions outputted from the instruction queue 102.

Now, operation of the instruction queue fetch unit 100 will be described.

A combination of the writing operation to the instruction queue latch 102 and the reading operation from the instruction queue latch 102 can be classified into the following five cases:
(1) First case in which only the writing of two words to the instruction queue latch 102 is executed by the bus controller 114 (the IQWR signal is active);
(2) Second case in which only the reading of one word from the instruction queue latch 102 to the execution unit 118 is performed (the QWRD signal is active);
(3) Third case in which only the reading of two words from the instruction queue latch 102 to the execution unit 118 is performed (the QLWRD signal is active); and
(4) Fourth case in which the writing of two words to the instruction queue latch 102 by the bus controller 114 and the reading of one word from the instruction queue latch 102 to the execution unit 118 are simultaneously performed (both of the IQWR signal and the QWRD signal are active).
(5) Fifth case in which the writing of two words to the instruction queue latch 102 by the bus controller 114 and the reading of two words from the instruction queue latch 102 to the execution unit 118 are simultaneously performed (both of the IQWR signal and the QLWRD signal are active).

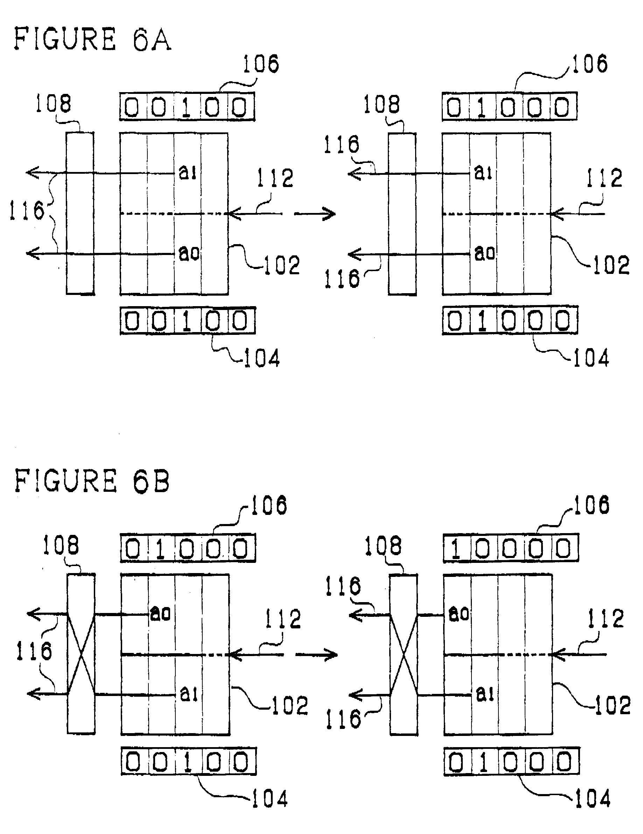

Referring to Figures 6A to 10B, there are illustrated the conditions of the instruction queue latch 102, the queue pointers 104 and 106 and the exchanger 108 in the above five cases, respectively. In these drawings, Reference Signs "a0", "a1", "a2" and "a3" are indicative of instruction codes in the queue latch 102. In addition, the status shown at the left side is changed to the status shown at the right side.

For the first case, reference should be made to Figures 6A and 6B. Figure 6A shows the case in which the IQX signal is "0" and Figure 6B shows the case in which the IQX signal is "1", namely the exchanger 108 exchanges the positions of the two received one-word data portions to each other. In either case, the contents of the instruction queue latch 102 are shifted toward the output side by one stage, and the instruction queue controller 110 activates the QPLF signal and the QPHF signal so that the lower place and upper place instruction pointers 104 and 106 are shifted toward the output side by one stage. Accordingly, the instruction codes "a0" and "a1" outputted to the instruction code output bus 116 are not changed. In addition, in this case, the status of the exchanger 108 is not changed.

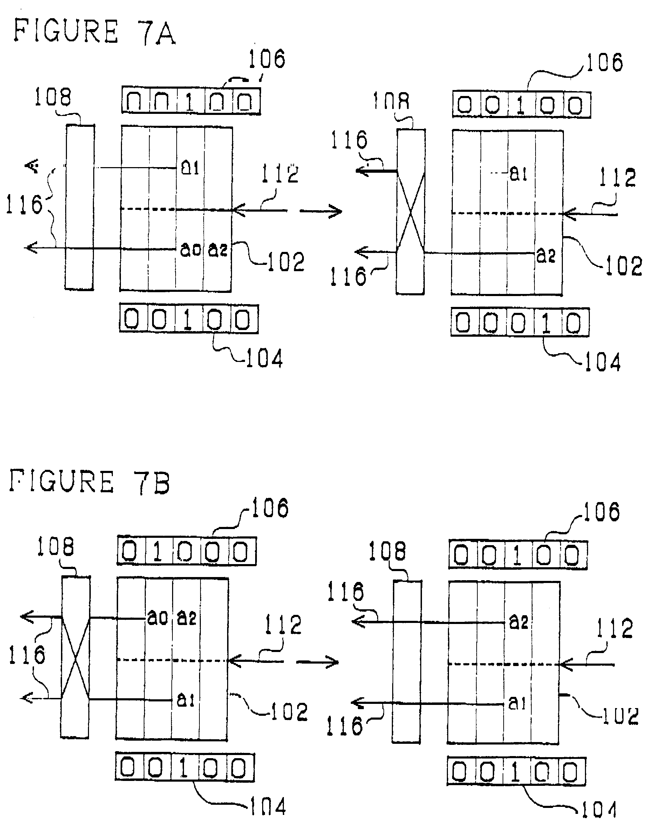

For the second case, reference should be made to Figures 7A and 7B. Figure 7A shows the case in which the IQX signal is "0" and Figure 7B shows the case in which the IQX signal is "1". In this case, the contents of the instruction queue latch 102 are not shifted, and the instruction queue controller 110 activates the QPLB signal in the case of the IQX signal being of "0", so that the lower place instruction pointer 104 is shifted toward the input side by one stage. In addition, the IQX signal is made to "1" so that the upper and lower place one-word data portions outputted from the queue latch 102 are exchanged to each other. On the other hand, if the IQX was of "1", the instruction queue controller 110 activates the QPHB signal so that the upper place instruction pointer 104 is shifted toward the input side by one stage. In addition, the IQX signal is returned to "0". Accordingly, next instruction codes "a1" and "a2" of two words in total are outputted to the instruction code output bus 116.

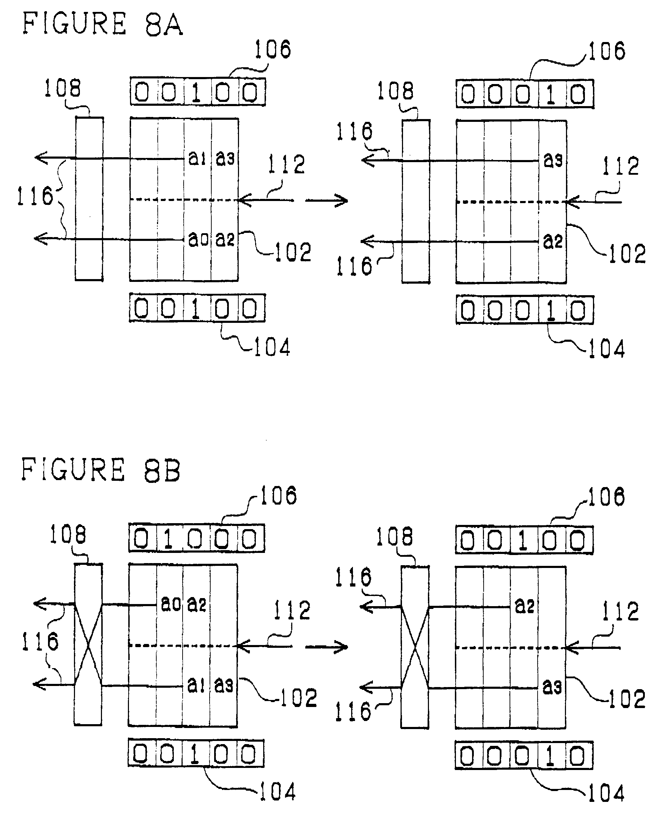

For the third case, reference should be made to Figures 8A and 8B. Figure 8A shows the case in which the IQX signal is "0" and Figure 8B shows the case in which the IQX signal is "1". In this case, the contents of the instruction queue latch 102 are not shifted, and the instruction queue controller 110 activates both of the QPLB signal and the QPHB signal so that both of the lower place and upper place instruction pointers 104 and 106 are shifted toward the input side by one stage. Accordingly, next instruction codes "a2" and "a3" of two words in total are outputted to the instruction code output bus 116. In this case, the status of the exchanger 108 is not changed.

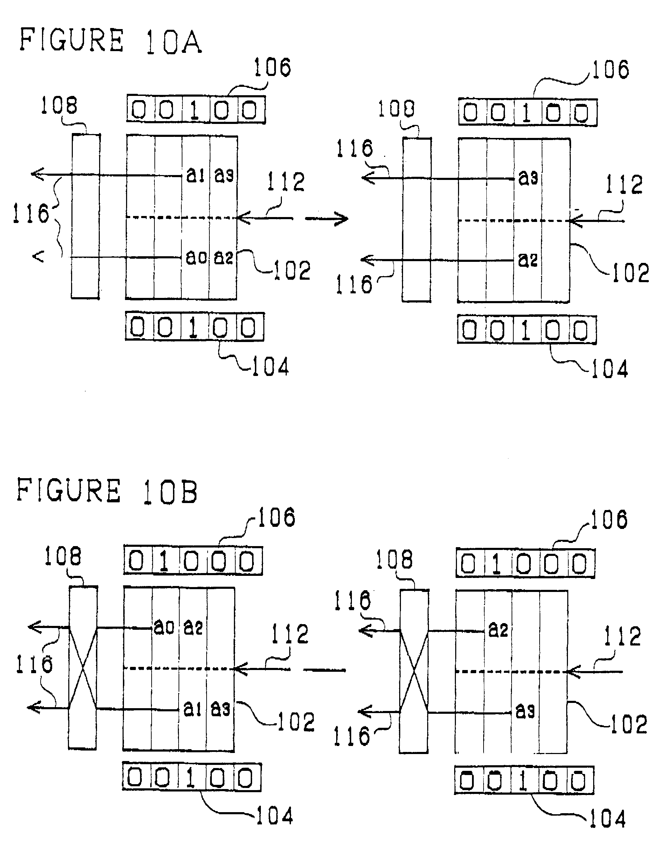

For the fourth case, reference should be made to Figures 9A and 9B. Figure 9A shows the case in which the IQX signal is "0" and Figure 9B shows the case in which the IQX signal is "1". In this case, the contents of the instruction queue latch 102 are shifted toward the output side by one stage, and the instruction queue controller 110 activates the QPHF signal in the case of the IQX signal being of "0", so that the upper place instruction pointer 106 is shifted toward the output side by one stage. In addition, the IQX signal is made to "1" so that the upper and lower place one-word data portions outputted from the queue latch 102 are exchanged to each other. On the other hand, if the IQX was of "1", the instruction queue controller 110 activates the QPLF signal so that the lower place instruction pointer 106 is shifted toward the output side by one stage. In addition, the IQX signal is returned to "0". Accordingly, next instruction codes "a1" and "a2" of two words in total are outputted to the instruction code output bus 116.

For the fifth case, reference should be made to Figures 10A and 10B. Figure 10A shows the case in which the IQX signal is "0" and Figure 10B shows the case in which the IQX signal is "1". The contents of the instruction queue latch 102 are shifted toward the output side by one stage, and on the other hand, lower place and upper place instruction queue pointers 104 and 106 and the exchanger 108 are maintained as they are. Accordingly, next instruction codes "a2" and "a3" of two words in total are outputted to the instruction code output bus 116.

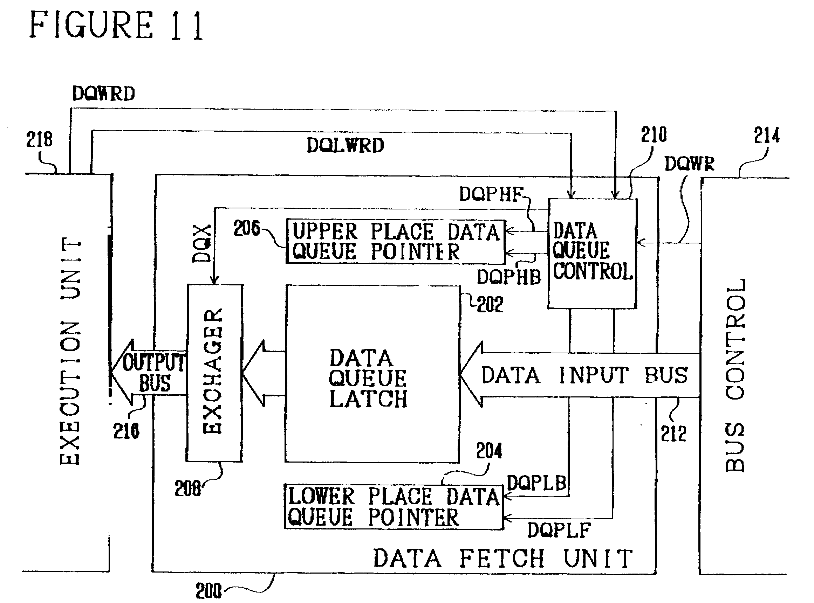

Turning to Figure 11, there is shown a block diagram of one embodiment of a data fetch unit in accordance with the present invention having a data block prefetch queue, which can be used in microcomputers.

A data fetch unit, indicated by Reference Numeral 200, includes a data queue latch 202 for storing data in units of two words and in a first-in first-out manner, a lower place data queue pointer 204 for indicating an read position for a lower place one-word portion of the two-word data latched in the data queue latch 202, and an upper place data queue pointer 206 for indicating an read position for an upper place one-word portion of the two-word data latched in the data queue latch 202. The data fetch unit 200 also includes a data queue exchanger 208 receiving the lower place one-word data and the upper place one-word data outputted from the data queue latch 202 and selectively exchanging the positions of the lower place and upper place one-word data portions to each other, and a data queue controller 210 for controlling the pair of queue pointers 204 and 206 and the exchanger 208.

In addition, the data fetch unit 200 is coupled through a data input bus 212 of a two-word length to a bus controller 214 which operates to read and write data from and to a memory (not shown). The data fetch unit 200 is also coupled through a data output bus 216 of a two-word length to an execution unit 218 for processing the data read from the instruction queue latch 202.

The data queue latch 202, the lower place data queue pointer 204 and the upper place data queue pointer 206 have the same hardware structures as the queue latch 102 and the pointers 104 and 106 shown in Figure 5, respectively.

Data which has been read from the memory by the bus controller 214 are written to the data queue latch 202 in units of two words, and then, data is read from the data queue latch 202 to the execution unit 218 in units of one word or in units of two words.

The data queue controller 120 receives from the bus controller 214 a data write signal DQWR indicating to write the data to the data queue latch 202 in units of two words. The data queue controller 210 also receives from the execution unit 218 a first data read signal DQWRD indicating to read the data from the instruction queue latch 202 in units of one word, and a second data read signal DQLWRD indicating to read the data from the instruction queue latch 202 in units of two words. The data queue controller 210 controls the operation of the pointers 204 and 206 and the exchanger 208 on the basis of the data write signal DQWR and the data read signals DQWRD and DQLWRD.

Namely, the data queue controller 210 supplies the lower place data queue pointer 204 with a first control signal DQPLB for indicating a shift of "1" toward the input side by one stage, and a second control signal DQPLF for indicating a shift of "1" toward the output side by one stage. Further, the data queue controller 210 outputs to the upper place data queue pointer 206, a first control signal DQPHB for indicating a shift of "1" toward the input side by one stage, and a second control signal DQPHF for indicating a shift of "1" toward the output side by one stage. In addition, the data queue controller 210 outputs an exchange signal DQX to the exchanger 208 for controlling the place inversion of the lower and upper place one-bit data portions outputted from the data queue 202.

The above mentioned data fetch unit 202 will operate in the same manner as that of the instruction code fetch unit 100 as described hereinbefore, and therefore, explanation of the operation will be omitted.

As seen from the above, the queue apparatus mentioned above is such that code or data having the width of two words can be written into the queue and the code or data can be read out from the queue either in units of one word or in units of two words. Therefore, the queue apparatus is incorporated as an instruction code prefetch queue for microcomputers or a data queue which processes a group of data transferred in the form of a block, the following advantages can be obatined:
(1) It is possible to remove the limit of the instruction code supply to the instruction execution unit due to the limited data width of the instruction queue, so that a sufficient required amount of instruction codes are supplied, with the result that the processing power of the microcomputer is elevated.
(2) Since a variable length of instruction codes are read out from the instruction queue, it is possible to read an immediate data in the instruction codes at a high speed and therefore to increase the instruction execution speed.
(3) If it is used as the data queue, a group of data including one-word length data and two-word length data in a mixed condition are previously transferred to the data queue in units of a block, and when instruction is executed, data can be read from the queue in accordance with an inherent length of each item of data. Therefore, it is possible to execute, in a pipelined manner, the block transfer of data from the memory and the internal processing of the microcomputer for the transferred data, with the result that the processing for the data block can greatly elevated.

In the above mentioned embodiments, the queue has the data width of two words. But, the data width is not limited to the two words and can assume any length. In addition, the instruction codes and data is divided into two parts, but can be divided into three or more by correspondingly increasing the number of the queue pointers and the number of channels exchanged by the exchanger.

## Claims

1. A queue apparatus comprising:
A multi-stage memory means (100) for storing instruction codes or data, said multi-stage memory means having a plurality of stages (102A to 102D), each stage storing instruction codes or data which can be divided into an upper half, including a most significant bit of said instruction codes or data stored in each of said stages, and a lower half, including a least significant bit of said instruction codes or data stored in each of said stages;
first reading position indicating means (106), coupled to said multi-stage memory means, for indicating a head position of upper halves of all instruction codes or data stored in said plurality of stages of said multi-stage memory means;
second reading position indicating means (104), coupled to said multi-stage memory means, for indicating a head position of lower halves of all instruction codes or data stored in said plurality of stages of said multi-stage memory means;
exchanging means (108), coupled to said multi-stage memory means, for receiving upper and lower halves of instruction codes or data read out from said multi-stage memory means and for selectively exchanging respective positions of received upper and lower halves of instruction codes or data with each other; and
control means **characterized** in that said memory means stores the codes or data in a first-in first-out manner and that said control means (110) includes a queue controller receiving a first read signal and a second read signal from an execution unit (118) and a write signal from a bus controller (114), respectively, said first read signal indicating a reading of a half of one instruction code stored in one stage of said multi-stage memory means (102), and said second read signal indicating a reading of both of said upper and lower halves of one instruction code stored in one stage of said multi-stage memory means (102), said queue controller responding to said write signal and said first and second read signals for controlling said first and second reading position indicating means so as to cause said first and second reading position indicating means to shift toward an output side of said multi-stage memory means an indication position of respective head positions of the upper and lower halves of all instruction codes or data stored in said plurality of stages of said multi-stage memory means (102), said queue controller responding to said first read signal so as to cause only one of said first and second position indicating means to shift toward an input side of said multi-stage memory means, the indication position of the head position of the corresponding half of all instruction codes or data stored in said plurality of stages of said multi-stage memory means and said queue controller responding to said second read signal so as to cause both of said first and second position indicating means to shift the indication position of the respective head positions of the upper and lower halves of all instruction codes or data stored in said plurality of stages of said multi-stage memory means toward an input side of said multi-stage memory means, said queue controller also operating in such a manner that when said second read signal is generated, on the basis of said first and second halves of said multi-stage memory means, instruction codes or data are read in response to the first read signal most recently before said second read signal is generated, said queue controller controls said exchanging means such that instruction codes or data read out from said multi-stage memory means are outputted to said execution unit in a proper sequence in which said upper and lower halves of said instruction codes or data read out from said multi-stage memory means are arranged in accordance with a proper order of address.

2. A queue apparatus claimed in Claim 1 wherein said memory means (100) includes m-stage n-word queue (where m is integer and n is even integer) coupled to a bus controller (114) to receive instruction codes or data in units of n words, and said exchanging means (108) is coupled to said queue to independently receive an upper place n/2-word portion and a lower place n/2-word portion of the instruction codes or data latched in said queue, respectively and selectively exchanges the positions of said received upper place and lower place n/2-word portions to each other.

3. A queue apparatus claimed in Claim 2 wherein said first reading position indicating means (106) includes a first queue pointer of one-bit width (m+1)-stages associated to said queue so as to indicate said read position of said upper place n/2-word portion of the instruction codes or data latched in said queue, and said second reading position indicating means (104) includes a second queue pointer of one-bit width (m+1)-stages associated to said queue so as to indicate said read position of said lower place n/2-word portion of the instruction codes or data latched in said queue, each of said queue pointers being such that only one stage is set with a predetermined bit which indicates said reading position, and when said predetermined bit is positioned at an first stage, it indicates that the queue is empty.

4. A queue apparatus claimed in Claim 3 wherein m is 1 and n is 2.

## Patentansprüche

1. Warteschlangen-Gerät mit:
einer Mehrstufen-Speichereinrichtung (100) zum Speichern von Befehlscodes oder Daten, wobei die Mehrstufen-Speichereinrichtung eine Anzahl von Stufen (102A bis 102D) aufweist, von denen jede Befehlscodes oder Daten speichert, die in eine obere Hälfte einschließlich eines höchstwertigen Bits der in jeder der Stufen gespeicherten Befehlscodes oder Daten, und eine untere Hälfte, einschließlich eines niedrigstwertigen Bits der in jeder der Stufen gespeicherten Befehlscodes oder Daten, unterteilt werden kann,
ersten Lesepositions-Anzeigemitteln (106), die mit der Mehrstufen-Speichereinrichtung gekoppelt sind, zum Anzeigen der Kopfposition der unteren Hälften aller Befehlscodes oder Daten, die in der Anzahl der Stufen der Mehrstufen-Speichereinrichtung gespeichert sind,
zweiten Lesepositions-Anzeigemitteln (104), die mit der Mehrstufen-Speichereinrichtung gekoppelt sind, zum Anzeigen der Kopfposition niedrigerer Hälften aller Befehlscodes oder Daten, die in der Anzahl von Stufen der Mehrstufen-Speichereinrichtung gespeichert sind,
Austauschmitteln (108), die mit der Mehrstufen-Speichereinrichtung gekoppelt sind, zum Empfang der oberen und der unteren Hälfte der Befehlscodes oder Daten, die aus der Mehrstufen-Speichereinrichtung ausgelesen sind, und zum selektiven Austauschen jeweiliger Positionen der empfangenen oberen und unteren Hälften der Befehlscodes oder Daten miteinander, und Steuermitteln,
dadurch **gekennzeichnet**, daß die Speichereinrichtung die Codes oder Daten in First-in-First-out-Weise speichert und daß die Steuereinrichtung (110) einen Warteschlangencontroller aufweist, der ein erstes Lesesignal und ein zweites Lesesignal von einer Ausführungseinheit (118) und ein Schreibsignal von einem Buscontroller (114) erhält, wobei das erste Lesesignal das Lesen einer Hälfte eines in einer Stufe der Mehrstufen-Speichereinrichtung (102) gespeicherten Befehlscodes angibt, und das zweite Lesesignal ein Lesen von sowohl den oberen als auch den unteren Hälften eines in einer Stufe der Mehrstufen-Speichereinrichtung (102) gespeicherten Befehls angibt, daß der Warteschlangencontroller auf das Schreibsignal und das erste und das zweite Lesesignal anspricht zur Steuerung der ersten und der zweiten Lesepositions-Anzeigemittel derart, daß die ersten und die zweiten Lesepositions-Anzeigemittel zu einer Ausgabeseite der Mehrstufen-Speichermittel die Anzeigeposition von jeweiligen Kopfpositionen der oberen und der unteren Hälften aller Befehlscodes oder Daten, die in der Anzahl der Stufen der Mehrstufen-Speichereinrichtung (102) gespeichert sind, verschieben, wobei der Warteschlangencontroller auf das erste Lesesignal derart anspricht, daß nur eines der ersten und zweiten Lesepositions-Anzeigemittel die Anzeigeposition der Kopfposition der entsprechenden Hälfte aller Befehlscodes oder Daten, die in der Anzahl von Stufen der Mehrstufen-Speichereinrichtung gespeichert sind, zur Eingabeseite der Mehrstufen-Speichereinrichtung verschieben und daß der Warteschlangencontroller auf das zweite Lesesignal derart anspricht, daß sowohl das erste als auch das zweite Positions-Anzeigemittel die Anzeigeposition der entsprechenden Kopfpositionen der oberen und der unteren Hälften aller Befehlscodes oder Daten, die in der Anzahl von Stufen der Mehrstufen-Speichereinrichtung gespeichert sind, in Richtung auf die Eingangsseite der Mehrstufen-Speichereinrichtung verschiebt, wobei der Warteschlangencontroller ferner in einer derartigen Weise arbeitet, daß, wenn das zweite Lesesignal erzeugt wird, auf Basis der ersten und zweiten Hälfte der Mehrstufen-Speichereinrichtung, Befehlscodes oder Daten in Abhängigkeit von dem ersten Lesesignal in kürzester Zeit gelesen werden, bevor das zweite Lesesignal erzeugt wird, daß der Warteschlangencontroller die Austauschmittel derart steuert, daß Befehlscodes oder Daten, die aus der Mehrstufen-Speichereinrichtung ausgelesen werden, der Ausführungseinheit in einer geeigneten Folge ausgegeben werden, wobei die oberen und die unteren Hälften der Befehlscodes oder Daten, die aus der Mehrstufen-Speichereinrichtung ausgelesen wurden, entsprechend der richtigen Adressreihenfolge angeordnet sind.

2. Warteschlangengerät nach Anspruch 1,
wobei die Speichereinrichtung (100) eine m-Stufen-n-Wörter Warteschlange aufweist (wobei m eine ganze Zahl und n eine gerade ganze Zahl sind), die mit einem Buskontroller (114) verbunden ist, um Befehlscodes oder Daten in Einheiten von n Wörtern zu erhalten, und wobei die Austauschmittel (108) mit der Warteschlange gekoppelt sind, um unabhängig einen oberen n/2-Wortteil und einen unteren m/2-Wortteil der Befehlscodes oder Daten zu erhalten, die in der Warteschlange gehalten sind, und selektiv die Positionen der empfangenen oberen und unteren n/2-Wortteile miteinander austauscht.

3. Warteschlangengerät nach Anspruch 2,
wobei die ersten Leseposition-Anzeigemittel (106) einen ersten Warteschlangenzeiger mit ein Bit breiten (m+1) Stufen aufweist, der der Warteschlange derart zugeordnet ist, daß die Leseposition der oberen n/2 Wortteile der Befehlscodes oder Daten angezeigt werden, die in der Warteschlange gehalten sind, und wobei die zweiten Lesepositions-Anzeigemittel (104) einen zweiten Warteschlangenzeiger mit ein Bit breiten (m+1) Stufen aufweist, der der Warteschlange derart zugeordnet ist, daß er die Leseposition der unteren n/2 Wortteile des Befehlscodes oder der Daten, die in der Warteschlange gehalten sind, anzeigt, wobei jeder der Warteschlangenzeiger derart aufgebaut ist, daß nur eine Stufe mit einem vorgegebenen Bit gesetzt wird, das die Leseposition anzeigt, und, wenn das vorgegebene Bit in der ersten Stufe angeordnet ist, es anzeigt, daß die Schlange leer ist.

4. Warteschlangengerät nach Anspruch 3,
wobei m gleich 1 ist und n gleich 2 ist.

## Revendications

1. Dispositif de file d'attente comprenant:
un organe de mémoire à plusieurs étages (100) pour stocker des codes d'instruction ou des données, ledit organe de mémoire à plusieurs étages comportant une pluralité d'étages (102A à 102D) , chaque étage stockant des codes d'instruction ou des données qui peuvent être séparés en une moitié supérieure incluant un binaire de poids le plus fort desdits codes d'instruction ou des données stockés dans chacun desdits étages et une moitié inférieure incluant un binaire de poids le plus faible desdits codes d'instruction ou des données stockés dans chacun desdits étages ;
un premier moyen d'indication de position de lecture (106), couplé audit organe de mémoire à plusieurs étages, destiné à indiquer une position de tête des moitiés supérieures de tous les codes d'instruction ou des données stockés dans la pluralité d'étages dudit organe de mémoire à plusieurs étages ;
un second moyen indicateur de position de lecture (104), couplé audit organe de mémoire à plusieurs étages, destiné à indiquer une position de tête des moitiés inférieures de tous les codes d'instruction ou des données stockés dans ladite pluralité des étages dudit organe de mémoire à plusieurs étages ;
un moyen d'échange (108) , couplé audit organe de mémoire à plusieurs étages, destiné à recevoir des moitiés supérieures et inférieures des codes d'instruction ou des données extraits dudit organe de mémoire à plusieurs étages et destiné à échanger, de façon sélective, les positions respectives des moitiés supérieures et inférieures reçues des codes d'instruction ou des données l'une avec l'autre ; et
un moyen de commande caractérisé en ce que ledit organe de mémoire stocke les codes ou les données à la manière du premier entré-premier sorti et en ce que ledit moyen de commande (110) inclut un contrôleur de file d'attente recevant un premier signal de lecture et un second signal de lecture venant d'une unité d'exécution (118) et un signal d'écriture venant d'un contrôleur de bus (114), respectivement, ledit premier signal de lecture indiquant une lecture d'une moitié d'un code d'instruction stocké dans un étage dudit organe de mémoire à plusieurs étages (102) et ledit second signal de lecture indiquant une lecture des deux dites moitiés supérieure et inférieure d'un code d'instruction stocké dans un étage dudit organe de mémoire à plusieurs étages (102), ledit contrôleur de file d'attente répondant audit signal d'écriture et auxdits premier et second signaux de lecture pour commander lesdits premier et second moyens indicateurs de position de lecture de façon à entrainer lesdits premier et second moyens indicateurs de position de lecture à décaler vers le côté sortie dudit organe de mémoire à plusieurs étages une position d'indication des positions de tête respectives des moitiés supérieures et inférieures de tous les codes d'instruction ou des données stockés dans ladite pluralité des étages dudit organe de mémoire à plusieurs étages (102), ledit contrôleur de file d'attente répondant audit premier signal de lecture de façon à entrainer seulement l'un desdits premier et second moyens indicateurs de position à décaler vers le côté entrée dudit organe de mémoire à plusieurs étages la position d'indication de la position de tête de la moitié correspondante de tous les codes d'instruction ou des données stockés dans ladite pluralité des étages dudit organe de mémoire à plusieurs étages et ledit contrôleur de file d'attente répondant audit second signal de lecture de façon à entrainer à la fois ledit premier et ledit second moyen indicateur de position à décaler la position d'indication des positions de tête respectives des moitiés supérieures et inférieures de tous les codes d'instruction ou des données stockés dans ladite pluralité des étages dudit organe de mémoire à plusieurs étages vers le côté entrée dudit organe de mémoire à plusieurs étages, ledit contrôleur de file d'attente fonctionnant également d'une manière telle que, lorsque ledit second signal de lecture est généré, sur la base desdites première et seconde moitiés dudit organe de mémoire à plusieurs étages, les codes d'instruction ou les données sont lus en réponse au premier signal de lecture tout juste avant que ledit second signal de lecture soit généré, ledit contrôleur de file d'attente contrôle ledit moyen d'échange de telle sorte que les codes d'instruction ou les données extraits dudit organe de mémoire à plusieurs étages soient délivrés à ladite unité d'exécution selon une séquence correcte dans laquelle lesdites moitiés supérieures et inférieures desdits codes d'instruction ou des données extraits dudit organe de mémoire à plusieurs étages sont diposées en conformité avec un ordre d'adresse correcte.

2. Dispositif de file d'attente selon la revendication 1, dans lequel ledit organe de mémoire (100) comprend une file d'attente de n mots à m étages (où m est un entier et n est un entier pair) couplé à un contrôleur de bus (114) pour recevoir des codes d'instruction ou des données en unité de n mots et ledit moyen d'échange (108) est couplé à ladite file d'attente pour recevoir de façon indépendante une partie de n/2 mots de rang supérieur et une partie de n/2 mots de rang inférieur des codes d'instruction ou des données respectivement verrouillés dans ladite file d'attente et échange de façon sélective les positions desdites parties reçues de n/2 mots de rang supérieur et de rang inférieur l'une avec l'autre.

3. Dispositif de file d'attente selon la revendication 2 , dans lequel ledit premier moyen indicateur de position de lecture (106) comprend un premier pointeur de file d'attente des (m+1) étages d'un bit de large associé à ladite file d'attente de façon à indiquer ladite position de lecture de ladite partie de n/2 mots de rang supérieur des codes d'instruction ou des données verrouillés dans ladite file d'attente et ledit second moyen indicateur de position de lecture (104) comprend un second pointeur de file d'attente des (m+1) étages d'un bit de large associé à ladite file d'attente de façon à indiquer ladite position de lecture de ladite partie de n/2 mots de rang inférieur des codes d'instruction ou des données verrouillés dans ladite file d'attente , chacun desdits pointeurs de file d'attente étant tel que seul un étage est établi à un bit prédéterminé qui indique ladite position de lecture et, lorsque ledit bit prédéterminé est situé au niveau d'un premier étage, il indique que la file d'attente est vide.

4. Dispositif de file d'attente selon la revendication 3, dans lequel m est égal à 1 et n est égal à 2.
